Europäisches Patentamt

European Patent Office

Office européen des brevets

(11) Publication number: **0 336 657**
**A1**

# EUROPEAN PATENT APPLICATION

(21) Application number: **89303195.5**

(22) Date of filing: **31.03.89**

(51) Int. Cl.⁴: **C03B 9/193**

(30) Priority: **31.03.88 US 176200**

(43) Date of publication of application:
**11.10.89 Bulletin 89/41**

(84) Designated Contracting States:
**AT BE CH DE ES FR GB IT LI NL SE**

(71) Applicant: **Kozora, Joseph W.**
**R.D. no. 2 P.O. Box 559**
**Valencia, PA 16059(US)**

(72) Inventor: **Kozora, Joseph W.**
**R.D. no. 2 P.O. Box 559**
**Valencia, PA 16059(US)**

(74) Representative: **Allden, Thomas Stanley et al**
**A.A. THORNTON & CO. Northumberland**
**House 303-306 High Holborn**
**London WC1V 7LE(GB)**

(54) **Glassware forming apparatus.**

(57) Equipment utilized for the production of finished rim glass containers in a press and blow operation is provided with a pre-assembled plunger positioner cartridge (20) is preferably utilized in combination with a quick-change plunger mounting assembly (18) to obtain greatly improved operational function and simplified quick component substitution.

FIG. 1

EP 0 336 657 A1

## GLASSWARE FORMING APPARATUS

### Background of the Invention

#### 1. Field of the Invention

This invention relates generally to glass container manufacturing and, more specifically, pertains to improved plunger guidance and the improved interchangeability of the plunger guidance components in the initial formation of the glass parison in the blank mold of press and blow glass container forming equipment.

#### 2. Description of the Prior Art

In the manufacture of glass containers such as bottles or jars having finished annular neck portions at the open ends thereof, it is common to use equipment designed to perform two successive operations; a glass gob pressing operation that utilizes a reciprocating plunger to form a hollow parison, and a blowing operation where the parison is expanded by vacuum and pressurized air to its final container shape. More particularly, the overall procedure in forming glass containers by the press and blow method involves introducing each gob of molten glass downwardly into a parison forming assembly comprising an inverted parison body press mold having at its lower end an inverted neck mold. The gob is held at a predetermined level within this parison forming unit and a vertically movable plunger is utilized to press the gob into the inverted parison body press mold and force the gob to flow downwardly-outwardly into molding contact within the neck mold. The product of the aforedescribed operation is a hollow parison which is then physically transferred away from the pressing equipment in an operation that involves opening the press mold and mechanically moving the neck mold such that the parison may then be subjected to a final blow mold operation to shape it to the final product configuration.

The components of the equipment utilized in the heretofore described gob pressing operation include a vertically-oriented elongated reciprocal piston to the end of which a plunger is mounted to project axially upwardly through a concentrically located plunger positioner or guiding assembly. It is common practice to have means to removably mount the plunger to the piston to enable selective plunger replacement and to enable removal and replacement of various components of the plunger positioner assembly. Such replacement capability enables substitution of new components for those which may be damaged or worn and, further, enables interchangeability of plunger size and related guiding assembly components within the range or capacity of the equipment and consistent with the size of the desired glass container to be formed.

During past years, there has been much activity in the glass container manufacturing industry directed toward to the provision of improved structure for guiding, positioning, mounting, and operating the pressing plunger, primarily for the purposes of improving the quality of the finished product and the reduction of the "down" time required for component substitution. For example, U.S. Patent 2,508,890 discloses glass manufacturing equipment generally as heretofore described and provides structure intended for plunger guidance, positioning, and operation. Different means for removably mounting a pressing plunger on a reciprocal piston are disclosed in U.S. Patents 3,607,206 and 4,033,744. The earlier of these two patents comprehends the provision of a quick-change split ring-type of plunger mount which permits limited shifting for alignment during the pressing operation. The later of these two patents introduces a quick-change plunger mounting arrangement where the plunger is rotationally engaged to and disengaged from the piston.

More recently, a plunger mounting assembly was detailed in U.S. Patent 4,636,240 which removably locks a plunger to the reciprocal piston by provision of a spring-loaded cylindrical sleeve that is axially retractable to permit quick short-arc rotational engagement or disengagement of the plunger. This system has had wide industrial acceptance because of its performance reliability, its quick-change feature, its superior dynamic plunger alignment characteristics, and the manner in which it seals and isolates the product being formed from the undesirable effects of air leaks from the pressurized flow used to operate the equipment and cool the components.

Despite the advances made in the prior art, there continue to be inherent problems in the use of known plunger guiding and positioning structure, and, while great operation efficiencies and improved products have been obtained through use of plunger assemblies constructed in accordance with the structure disclosed in U.S. Patent 4,636,240, such use has served to clearly identify certain shortcomings in conventional plunger positioner assemblies.

A conventional positioner assembly, which includes a generally cylindrical plunger guiding sleeve, is clearly illustrated and explained in U.S.

Patent 4,272,273. To replace damaged or worn parts in such an assembly or to convert it to a size consistent with a selected size of plunger when the equipment is fully changed over to enable production of a different size glass container, extensive and unacceptable "down" time is involved to enable each part of the positioner assembly to be separately replaced. Special tooling must be brought into play and laboriously attached to the piston end whereby a heavy duty spring which encircles the guide sleeve can be compressed and held while final mounting of all related components is completed. Moreover, the conventional guide sleeve is itself aligned at its lower end by sliding annular contact with the elongated piston, which not only creates a debris collecting shelf during operation but establishes axial alignment of the sleeve as a direct function of the alignment or slight misalignment of the elongated piston. There are other problems and disadvantages in conventional plunger positioning structure which will become apparent later in this specification with the explanation of the invention herein disclosed.

Summary of the Invention

The present invention comprehends the provision of an improved plunger positioner assembly in press and blow glass container manufacturing equipment which may be adapted for use with various types of plunger mounting arrangements, but which is preferably utilized in combination with the type of plunger mounting assembly disclosed in U.S. Patent 4,636,240 (hereinafter referred to as the "quick-lock plunger mount"). By this preferred combination, the advantages attainable by the quick-lock plunger mount are enhanced, and a virtually sealed air flow and exhaust system is established, thus enabling significantly lower air pressure operation and virtually eliminating undesirable product specking.

The present invention also provides significantly improved maintenance of plunger alignment during equipment operation whereby greater uniformity in the wall thickness of the formed glass container is consistently obtained. Moreover, conversion of conventional glass manufacturing equipment to incorporate the present invention introduces versatility heretofore unobtainable; such equipment can then be used not only for glass containers having intermediate neck diameters but also narrow neck containers.

More specifically, the plunger positioner assembly of the present invention is a pre-assembled "drop-in" cartridge having a tubular positioning or guide sleeve concentrically positioned substantially within an outer barrel. The barrel is generally cylindrical and has an upwardly-disposed open end with an outwardly projecting integral flange portion. At its lower end, the barrel has an inwardly-projecting integral annular flange portion. A sleeve guard element is disposed within the barrel against the barrel's lower end inwardly-projecting annular flange portion and encircles the inner end of the positioning sleeve. Intermediate along its length, the positioning sleeve has an integral annular outwardly-projecting ledge with an annular groove supporting a seal ring. Within the barrel, an annular cavity is defined between the outer surface of the sleeve and the inner surface of the barrel, and the upper and lower ends of the cavity are respectively defined by the intermediate annular ledge of the sleeve and the sleeve guide element.

Disposed on the upper end of the barrel is a cap member having a central opening and a downwardly-projecting annular body portion and a radially-outwardly-projecting flange portion. The cap member body portion projects downwardly within the opening of the barrel, and the flange portion of the cap member registers within the outwardly-projecting flange portion at the end of the barrel. An end of the positioning sleeve projects through the opening of the cap member. Within the annular cavity defined by the sleeve's outer surface and the barrel's inner surface is mounted a wound compression spring, the ends of which bear against the sleeve guard at the lower end of the barrel and against the under surface of the annular projection or ledge of the sleeve.

The sleeve is adapted to reciprocate axially a limited distance relative to the barrel in which it is carried, and ring-like wipers are provided in annular slots within the cap member to form a dynamic seal against the outer surface of the sleeve. Provision is made to bolt the cap member flange to the barrel flange to thereby retain the aforedescribed components in a unitized cartridge form.

In assembling glass container manufacturing equipment for the initial gob pressing operation, the aforedescribed cartridge is downwardly inserted into a typical mounting block having a vertically-extending cylindrical bore through which the elongated reciprocal piston of the machine vertically extends. Provision is made for fastening the cartridge into position by means of bolts which extend through the registered flanges of the cap member and the barrel and into accommodating threaded holes in the block. Once the cartridge is secured in place on the block, a plunger having a base expanse designed to slidably contact the inside surface of the positioning sleeve is appropriately mounted to the end of the piston to establish an operative plunger positioning structural combination.

The preferred combination is the utilization of the cartridge structure, as heretofore described and as more particularly detailed in the ensuing description, in combination with a plunger adapted to utilize the type of plunger mounting assembly heretofore referred to as the quick-lock plunger mount.

From the preceding description it should be apparent that the present invention enables pre-assembly and bench testing of both the plunger mounting assembly and the plunger positioning assembly to be used in press and blow glass container manufacturing equipment whereby actual on-site changeover of either the plunger or the positioner cartridge can be quickly accomplished with limited equipment "down" time.

Other features and advantages of the combination afforded by the present invention will be specifically set forth or apparent from the ensuing description when read in reference to the various figures of the accompanying drawings.

## Brief Description of the Drawings

Figure 1 is a view in vertical section of a plunger positioning assembly and a plunger mounted on a piston for cooperative operation in combination with a preferred plunger mounting assembly in press and blow glass container manufacturing equipment. The figure illustrates the location of various movable components during the equipment's operation; the left side of the vertical center line showing component disposition at full plunger extension, and the right side of the vertical center line showing component disposition at full plunger retraction.

Figure 2 is a perspective view of a pre-assembled cartridge which contains the necessary components for plunger positioning in the structure shown in Figure 1, but here shown in an enlarged scale as compared to Figure 1.

Figure 3 is an exploded perspective view of the cartridge shown in Figure 2 but here shown on a comparatively smaller scale.

Figure 4 is a perspective exploded view of various components or elements first shown in Figure 1 and showing the cartridge of Figures 2 and 3 in its installed operative position, ready for installation of the preferred quick-lock plunger mount in combination with the cartridge.

## Detailed Description of the Preferred Embodiment

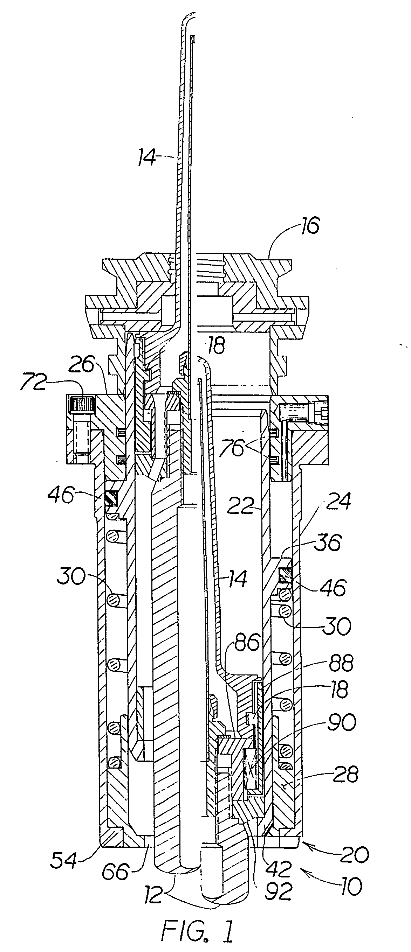

Figure 1 illustrates press and blow glass container manufacturing equipment 10 including a vertically reciprocal elongated piston 12 on which is mounted a plunger 14. The plunger 14, by virtue of its mounted position on the end of the piston 12, is adapted to be moved vertically upwardly and downwardly from a retracted position as shown on the right side of the center line in Figure 1 to an extended position, through a neck ring 16, as shown on the left side of the vertical center line in Figure 1. The plunger 14 is removably mounted to the end of the piston 12 by a quick-lock plunger mount 18.

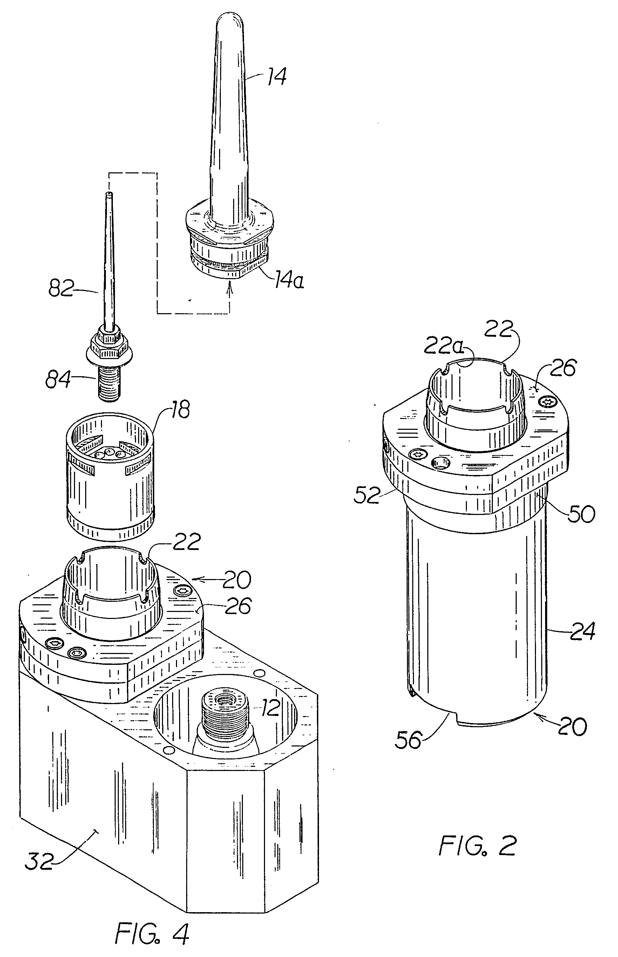

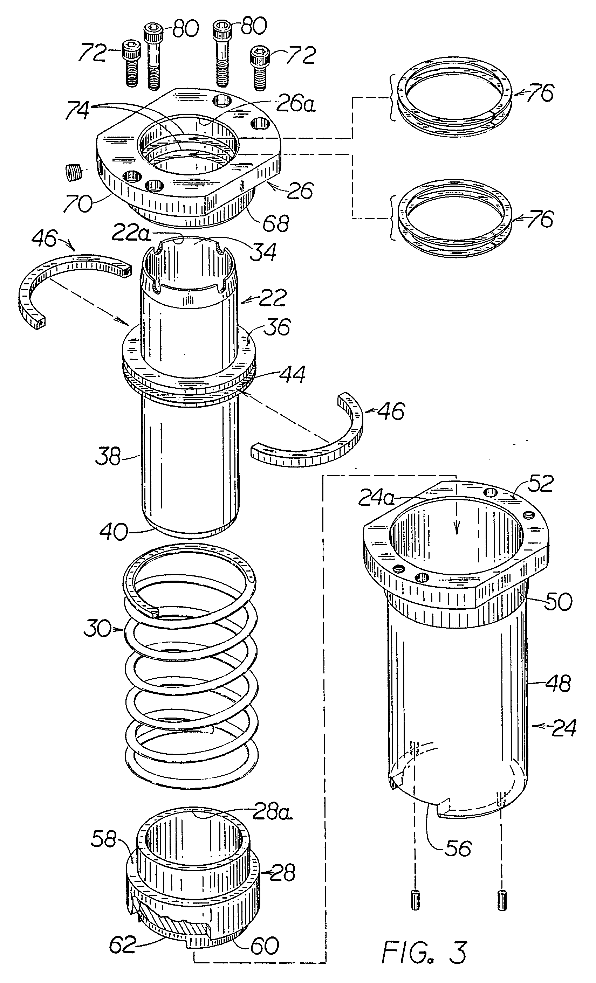

Figure 1 also illustrates a pre-assembled plunger positioning cartridge 20, shown in its operative position relative to the piston 12 and the plunger 14. The plunger 14, which is also variously illustrated in Figures 2 and 3, is guided and positioned by a sleeve 22 operatively contained within a barrel 24. At the upper end of the barrel 24, a bolt-on cap member 26 is provided. Within the barrel 24, at its lower end, is a sleeve guard 28. Within an annular cavity partially defined by the inside surface of the barrel 24 and the outer surface of the sleeve 22 is a coiled compression spring 30. Each of the components 22, 24, 26, and 28 of the cartridge 20 have respective central bores 22a, 24a, 26a, and 28a which become concentrically aligned when the cartridge 20 is assembled.

The pre-assembled cartridge 20, prior to its insertion into position within the block 32 as shown in Figure 4, appears as shown in Figure 2. The interrelationship of the various components of the cartridge 20, however, can be best appreciated by reference to Figure 3. There, the sleeve 22 is shown as including an upper end portion 34, an intermediate integral annular ledge 36, and a lower body portion 38. The lower body portion 38, at its lower end, has an inwardly-angled edge 40 and an inwardly-directed annular flange or shelf 42 (best shown in Figure 1). The annular ledge 36 is provided with an annular outwardly-facing slot 44 which receives a floating ring guide or seal made up of matching segments 46.

The barrel 24 which, along with the cap member 26, forms the housing for the cartridge 20, has a major body portion 48 and a neck portion 50. Projecting outwardly from the upper end of the barrel 24 is an integral flange 52. The lower end of the barrel 24 has an integral inwardly-projecting flange 54 (see Figure 1) which is interrupted by the provision of air flow notches 56.

The sleeve guard 28, which is insertably received into the lower end of the barrel 24, as shown in Figure 1, has an intermediate body portion 58 with an outside diameter such that it is in a contact fitting relationship with the inside surface of the barrel 24. A lower end portion 60 of the sleeve guard 28 is sized to project downwardly through the lower opening of the barrel 24 in registration with the flange 54 and is provided with notch 62 which aligns with notch 56 of the barrel 24. The lower end portion 60 projects radially-inwardly to form a ledge or seat 66 for the lower end of the sleeve 22, as shown in Figure 1.

The cap member 26 has a substantially cylindrical body portion 68 and an integral outwardly-projecting flange portion 70 designed to register with and be bolted to the flange 52 of the barrel 24 in the final assembly of the cartridge 20. For this purpose, bolts 72 are provided to extend downwardly through accommodating openings in flange 70 and threadably fasten into appropriate threaded holes in flange 52. Within the bore 26a, a plurality of annular slots 74 are provided to accommodate wiper elements 76.

The cartridge 20, as shown in Figure 2, is fully pre-assembled to include all of the components shown in Figure 3 and then the cartridge may be installed in its operative position as a unit as shown in Figure 4. The cartridge 20 is a drop-in unitized assembly which is fastened into its operative position in the block 32 by means of fastening bolts 80, which project through accommodating openings in the flange 70 of the cap member 26 and are threadably secured into holes provided on the upward face of the block 32. It should be noted that the barrel 24 of the cartridge 20, at its major body portion 48, has an outside diameter of sufficiently less than the inside diameter of the bore in the block 32 and that there is no resistance to initial insertion of the cartridge into the block bore. The neck portion 50 of the barrel 24, however, has a comparatively wider outside diameter whereby it forms a contacting press fit with the inside diameter of the block bore.

Once the cartridge 20 is fastened in its operative position in the block 32, the quick-lock plunger mount 18 may then be mounted to the end of the piston 12 which extends centrally-upwardly through the cartridge 20. Reference should be made to Kozora U.S. Patent 4,636,240 for a detailed description of the quick-lock plunger mount. From such reference it will be realized that the quick-lock plunger mount 18 is threadably secured to the end of piston 12 and then an air flow distribution tube 82, having a lower end threaded portion 84, is screwed into a central threaded opening in a spacer block component of the quick-lock plunger mount 18. The selected tube 82, with respect to its size and configuration, depends upon the selected plunger 14 to be mounted, by means of the quick-lock plunger mount 18, to the piston 12. Plunger 14 in Figure 4 represents one of many plungers of different profiles that can be utilized with the equipment, depending upon the size and neck configuration, etc., of the glass container to be produced. Although the upper end of the plunger may differ in profile from that shown on plunger 14 in Figure 4, depending upon the characteristics of the glass container to be formed, the lower or base end 14a would be identical for all plungers intended for use as part of the quick-lock plunger mount, as more specifically detailed in the aforementioned Kozora Patent.

As shown in Figure 1, the quick-lock plunger mount 18 includes a rigid centrally-bored support member 86 and an outer axially retractable sleeve or shell 88. The plunger mount also includes a compression spring means 90 and a spacer block 92. The aforementioned elements function substantially identical to the explanation given in the aforementioned Kozora U.S. Patent 4,636,240, except that the spring means 90 shown in Figure 1 is one of an array of four substantially small diameter compression springs located in a quadrant relationship about the support member 86, and this spring arrangement has replaced the single compression spring shown in the aforementioned patent. Moreover, the spacer 92 is not provided with an outer annular wiping seal as shown in the embodiment illustrated in the patent. The interconnection of the base end 14a of the plunger 14 relative to the support member 86 and the sleeve or outer shell 88 is structurally consistent with the same elements shown in the patent.

In the operation of the apparatus illustrated in Figure 1, the piston 12, with the plunger 14 mounted thereon, is adapted to be moved upwardly from the plunger-retraction position shown on the right side of the center line to the fully extended or pressing position shown on the left side of the center line of Figure 1. During the pressing function, the sleeve 22 of the cartridge 20 is extended outwardly from the barrel and through the central bore of the cap member 26, this being the sleeve's normal position by virtue of the force normally applied against the underside of the ledge 36 by the compression spring 30. When the plunger 14 is caused to retract downwardly to the position shown on the right side of the center line in Figure 1, the engagement of the spacer 92 of the quick-lock plunger mount 18 against the inwardly directed ledge 36 of the sleeve 22 causes the sleeve 22 to also downwardly retract, compressing and overcoming the force of the spring 30. Thus, the upper or normally outer end of the sleeve 22 is extended to provide full lateral support about the quick-lock plunger mount 18 when the plunger is at full extension but the sleeve 22 is fully withdrawn within the cartridge 20 when the plunger is in the gob-loading retracted position.

The cartridge 20 used in combination with the quick-lock plunger mount 18 provides significantly improved control of the cooling air and exhaust flow within the mechanism. A pressurized flow of air is delivered upwardly through the piston 12 and, thence, into the air distribution tube 82 to cool the plunger. The air is distributed outwardly from the distribution tube 82 and downwardly through the passages provided in the support member 86 which, in turn, communicates with the annular space about the piston 12 and within the sleeve 22. Provision is made to directly expel the exhaust air at the bottom end of the cartridge 20, and the use of the illustrated wiping seals between the axially-movable components virtually eliminates leakage from the substantially operated with less than one-third the pressure normally required by the prior art to achieve both operational function and cooling. Such reduced pressure lessens leakage and the more direct air pathway improves cooling efficiency. Whereas prior art press and blow mechanisms may require intentionally cutting off air flow at the retracted position of the plunger, the apparatus of the present invention permits constant cooling flow.

Maintaining alignment of the plunger during operation is greatly enhanced by the disclosed apparatus. The sleeve 22 in which the plunger reciprocally moves is supported at three spaced-apart points; at its upper end against the wipers 76, at an intermediate position by means of the seal segments 46, and at its lower end where it is slidably contained within the sleeve guard 28. Within the sleeve 22, the plunger is maintained in proper linear alignment by virtue of the contact of the spacer block 92 against the inside surface of the sleeve 22 and by contact of the piston 12 in the area below the cartridge 20, against the inside surface of its support block (not shown). The quick-lock plunger mount 18 serves to prevent lateral tilt of the plunger in its fully extended position relative to the piston 12, but, nevertheless, enables a limited amount of plunger base end "float" laterally to achieve a fine dynamic alignment adjustment with the neck ring 16.

Aside from eliminating the lengthy "down" time required to complete the loose part installation of positioner components familiar to the prior art, the disclosed pre-assembled cartridge system of the present invention, used in combination with the quick-lock plunger mount, adds versatility to glass container manufacturing apparatus by permitting a significantly wider range of sizes of containers to be formed with the same basic forming equipment. Whereas prior art equipment for the same purpose can only produce containers having a maximum internal neck diameter of 38 millimeters, the equipment of the present invention has proven to be capable, through appropriate plunger and cartridge changeover, of producing containers having a neck diameter ranging from 26 millimeters to greater than 68 millimeters.

## Claims

1. Glass container manufacturing apparatus for performing a press and blow operation including a pre-assembled plunger positioner cartridge for mounting in its operative position as a unit, the cartridge having an outer barrel and a plunger guide sleeve disposed substantially within the barrel, the sleeve mounted to move axially relative to the barrel between a first extended position at which the sleeve projects outwardly from the barrel and a second retracted position at which the sleeve is substantially within the barrel.

2. The apparatus of Claim 1 wherein an internal annular cavity is defined between the barrel and the sleeve, and a coiled compression spring is contained in the cavity.

3. The apparatus of Claim 2 wherein the sleeve has, intermediate along its length, an integral radially-outwardly annular ledge, and one end of the compression spring rests against the ledge.

4. The apparatus of Claim 1 wherein the barrel has a flanged end, and further including a centrally-bored cap member mounted on the flanged end and having removable fastening means affixing it to the flanged end, the sleeve extending outwardly through the central bore of the cap member when the sleeve is in its first extended position.

5. The apparatus of Claim 1 wherein an annular cavity is defined between the sleeve and the barrel, and a centrally-bored removable sleeve guard is contained within the cavity in sliding contiguous relationship to the sleeve.

6. The apparatus of Claim 1 further comprising a circular sealing means carried on the sleeve and sliding against the barrel when the sleeve is moved relative to the barrel.

7. The apparatus of Claim 1 wherein the barrel and the sleeve define an annular space therebetween and further including means supporting the sleeve in axial alignment within the barrel.

8. Glass container manufacturing apparatus for performing a press and blow operation including a pre-assembled plunger positioner cartridge having an outer barrel and a plunger guide sleeve disposed substantially within the barrel, the cartridge being removably mounted to permit a piston, with a plunger mounted on its end, to move in a path defined by the axis of the sleeve, the plunger removably mounted to the piston end by a quick-lock plunger mount assembly having an axially retractable tubular shell surrounding a support member threadably fastened to the piston end, a generally circular spacer block forming part of the mount assembly and surrounding the end of the piston and having an outer surface in sliding contact with the inside surface of the sleeve.

9. The apparatus of Claim 8 wherein an end of the sleeve normally projects outwardly beyond the end of the barrel, and the spacer block engages against an integral ledge of the sleeve and causes the sleeve to retract fully within the barrel in response to retractive movement of the piston and plunger.

FIG. 1

FIG. 4

FIG. 2

FIG. 3

European Patent Office

**EUROPEAN SEARCH REPORT**

Application number

**DOCUMENTS CONSIDERED TO BE RELEVANT** | EP 89303195.5

| Category | Citation of document with indication, where appropriate, of relevant passages | Relevant to claim | CLASSIFICATION OF THE APPLICATION (Int. Cl.4) |
|---|---|---|---|
| D,A | US - A - 4 636 240 (KOZORA) * Totality * -- | 1-9 | C 03 B 9/193 |
| D,A | US - A - 4 272 273 (TRAHAN et al.) * Totality * -- | 1-9 | |
| D,A | US A - 4 033 744 (DAVIS) * Abstract; column 2, line 41 - column 3, line 67; fig. -- | 1-9 | |
| D,A | US - A - 3 607 206 (FOSTER et al.) * Column 2, line 67 - column 6, line 8; fig. * -- | 1-9 | |
| A | GB - A - 2 156 802 (EMHART INDUSTRIES INC.) * Page 2, line 57 - page 3, line 26; fig. * -- | 1 | **TECHNICAL FIELDS SEARCHED (Int. Cl.4)** |
| P,A | DE - A1 - 3 638 677 (FA. HERMANN HEYE) * Totality * ---- | 1 | C 03 B |

The present search report has been drawn up for all claims

| Place of search | Date of completion of the search | Examiner |
|---|---|---|
| VIENNA | 07-07-1989 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82